# EUROPEAN PATENT SPECIFICATION

(11) **EP 3 580 610 B1**
(45) Date of publication and mention of the grant of the patent: **04.11.2020**
(21) Application number: 18709446.1
(22) Date of filing: 12.02.2018
(51) Int. Cl.: G03B 17/56

(54) **OPTICAL DEVICE COVER**
OPTISCHE GERÄTEABDECKUNG
COUVERTURE DE DISPOSITIF OPTIQUE

(30) Priority: 13.02.2017 US 201762458294 P
(43) Date of publication of application: 18.12.2019
(73) Proprietor: Huf North America Automotive Parts Mfg. Corp., Mikwaukee, Wisconsin 53224 (US)
(72) Inventor: ASHTIANI, Mansour, Milwaukee, Wisconsin 53224 (US); KAMAL, Ehab, Milwaukee, Wisconsin 53224 (US); MUELLER, Ulrich, Milwaukee, Wisconsin 53224 (US); NEWKIRK, David, Milwaukee, Wisconsin 53224 (US); MENZIE, Brian, Milwaukee, Wisconsin 53224 (US)
(74) Representative: Wallin, Nicholas James
(86) International application number: PCT/US2018/017846
(87) International publication number: WO 2018/148668

(56) References cited:
- WO-A1-2013/169987
- CN-B- 104 898 189
- US-A1- 2004 032 638
- US-A1- 2015 223 672

## Description

The present disclosure relates generally to a cover for an optical device and more particularly to systems and methods for protecting an optical device.

### BACKGROUND

This section provides background information related to the present disclosure and is not necessarily prior art.

Many motor vehicles now come equipped with some variation of a camera and sensor system to provide real-time monitoring or viewing of an area near the motor vehicle. For example, cameras, sensors such as optical sensors, or both are often positioned on the front of the vehicle, on the rear of the vehicle, and/or on the side of the vehicle. The cameras and sensors can detect the areas surrounding the vehicle that are not otherwise viewable with conventional mirrors. Such cameras and sensors can be used to assist the vehicle operator in parking or maneuvering the vehicle during normal operation or to monitor conditions in the areas surrounding the vehicle, for example.

In some applications, it may be desirable to provide a camera or a sensor that is selectively exposed (e.g., visible) to the areas surrounding the vehicle. For example, considerations such as aesthetics and/or privacy may require that the camera or sensor be hidden (e.g., invisible) to the areas surrounding the vehicle when the camera or sensor is not in use. In this regard, some vehicles may utilize a deployable sensor system in which the camera or sensor is selectively deployable and/or stowable. Accordingly, such a camera or sensor can be deployed when it desirable to monitor the area surrounding the vehicle, and stowed when it is desirable to hide the camera or sensor relative to the area surrounding the vehicle.

Fixed and deployable cameras and sensors are often exposed to various environmental factors, such as rain, snow, ice, debris, and dirt, etc. that can limit the ability of the camera or sensor to perform (e.g., capture an image or sense a condition) in the desired manner. Accordingly, manufacturers continually strive to maintain a camera and/or sensor associated with a vehicle free from such factors that can diminish operation of the camera and/or sensor.

Examples of conventional cameras are disclosed in US 2015/223672 A1, CN 104 898 189 B and WO 2013/169987 A1.

### SUMMARY

This section provides a general summary of the disclosure, and is not a comprehensive disclosure of its full scope or all of its features.

According to some aspects, a cover for an optical device is provided. The cover for an optical device may include a concave surface, a convex surface formed on an opposite side of the cover than the concave surface, and a hydrophobic coating formed on the convex surface. The cover for an optical device may also include an adhesive disposed on the concave surface proximate an outer perimeter of the cover that attaches the cover to the optical device, such that a majority of a field of view of the optical device is not covered by the adhesive.

In some implementations, the cover for an optical device includes a release film removably attached to the adhesive. The cover may also be formed from a material with a refractive index greater than 1.4. The cover may be either acrylic, styrene, polycarbonate, cyclic-olefin polymers, cyclic-olefin copolymers, or glass. The cover may be formed from a flexible material.

In some examples, the concave surface matingly receives a convex surface of the optical device. The optical device may be a camera, a mirror, a sensor such as an optical sensor, or a light source. The adhesive may have a light transmission percentage greater than 85%. The hydrophobic coating may form a repulsion contact angle with a water droplet. The repulsion contact angle between the hydrophobic coating and the water droplet may range from about 90 degrees (90°) to about 180 degrees (180°).

According to other aspects, a method for making a cover for an optical device is provided. The method includes applying a hydrophobic coating to a convex surface of the cover and applying an adhesive to the concave surface proximate an outer perimeter of the cover. The convex surface may have an opposite side defined by the concave surface. The adhesive may attach the cover to the optical device such that a majority of a field of view of the optical device is not covered by the adhesive.

In some implementations, the method includes attaching a release film to the adhesive opposite the concave surface. Applying the hydrophobic coating may include applying the hydrophobic coating to the convex surface of the cover. The cover may be formed from a material with a refractive index greater than 1.4. In some examples, applying the hydrophobic coating may include applying the hydrophobic coating to the convex surface of the cover. The cover may be formed from acrylic, styrene, polycarbonate, cyclic-olefin polymers, cyclic-olefin copolymers, or glass. Applying the hydrophobic coating may include applying the hydrophobic coating to the convex surface of flexible material.

In some examples, applying the adhesive to the concave surface includes applying the adhesive to the concave surface that matingly receives a convex surface of the optical device. Applying the adhesive to the concave surface that matingly receives a convex surface of the optical device may also include attaching the cover to a camera, a mirror, a sensor, or a light source as the optical device via the adhesive. Applying the adhesive to the concave surface may further include applying adhesive with a light transmission percentage greater than 85%. In some implementations, applying the hydrophobic coating includes applying the hydrophobic coating that forms a repulsion contact angle with a water droplet. Applying the hydrophobic coating may also include applying the hydrophobic coating defined by a repulsion contact angle between the water droplet and the hydrophobic coating that ranges from about 90 degrees (90°) to about 180 degrees (180°).

According to some aspects, a cover for an optical device is provided. The cover for an optical device may include a concave surface, a convex surface formed on an opposite side of the cover than the concave surface, and a hydrophobic coating formed on the convex surface. Alternatively, the cover could include a substantially planar construction having one side including the hydrophobic coating and the opposite side including an adhesive. Such a construction would be useful for an application where the optical device includes a substantially planar lens or other working surface (i.e., a detection surface in the case of an optical sensor).

Regardless of the particular shape of the cover, the cover may be attached to the optical device by attaching the planar or concave surface to a planar or convex surface of the optical device to allow the hydrophobic coating to repel water and other liquids, thereby maintaining a clear field of view for the optical device. For example, the cover could be applied to a lens of a camera located at a front, a rear area, and/or at a side area of a vehicle (i.e. in a camera disposed in a door handle, for example). Further, the cover could be applied to a sensor, including an optical sensor, or to a transparent or translucent portion of a light guide. Namely, the cover could be applied to an optical sensor at a front and/or rear bumper to maintain a surface of the sensor clean and dry and could be applied to the transparent or translucent portion of the light guide to keep the portion clean and dry, thereby allowing a desired amount of light to pass through the transparent or translucent portion. Accordingly, use of a hydrophobic coating having self-cleaning properties on a surface of an optical device can help provide a greater and a more uniform light transmission by reducing potential light obstructions when compared to a surface without such self-cleaning properties. By allowing a surface to remain clean and dry, the hydrophobic coating may prevent undesirable hot spots ordinarily seen as non-uniform lighting.

While the hydrophobic coating may be applied to a planar or convex surface of the cover, the hydrophobic coating could alternatively be applied directly to a convex or planar surface of the optical device itself. For example, the hydrophobic coating could be applied directly to a lens of a camera, a surface of a mirror or sensor such as an optical sensor, or a surface of a light guide to prevent liquid from inhibiting proper operation of these devices.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected configurations and not all possible implementations, and are not intended to limit the scope of the present disclosure.
FIG. 1 is a perspective view of a vehicle incorporating an optical device in accordance with the principles of the present disclosure;
FIG. 2 is a front perspective view of an exemplary optical device;
FIG. 3A is an exploded view of an exemplary optical device incorporating an optical device cover in accordance with the principles of the present disclosure;
FIG. 3B is an exploded view of an exemplary optical device incorporating an optical device cover in accordance with the principles of the present disclosure;
FIG. 3C is an exploded view of an exemplary optical device incorporating an optical device coating in accordance with the principles of the present disclosure;
FIG. 4 is a perspective view of a cover for use with an optical device;
FIG. 5A is a partial cross-sectional view of the exemplary optical device, not part of the invention, of FIG. 2 taken along Line 5A-C of FIG. 2 and showing a first configuration of a cover for use in conjunction with the optical device;
FIG. 5B is a partial cross-sectional view of the exemplary optical device of FIG. 2 taken along Line 5A-C of FIG. 2 and showing an alternate configuration of a cover for use in conjunction with the optical device;
FIG. 5C is a partial cross-sectional view of the exemplary optical device, not part of the invention, of FIG. 2 taken along Line 5A-C of FIG. 2 and showing a coating applied directly to a lens of the optical device;
FIG. 6 is a perspective view of a vehicle mirror, not part of the invention, incorporating a protective cover for an optical device in accordance with the principles of the present disclosure;
FIG. 7 is a perspective view of a door handle, not part of the invention, incorporating a light bar and a protective cover in accordance with the principles of the present disclosure; and
FIG. 8 provides a method, not part of the invention, for making a cover for an optical device in accordance with the principles of the present disclosure.

Corresponding reference numerals indicate corresponding parts throughout the drawings.

### DETAILED DESCRIPTION

Example configurations will now be described more fully with reference to the accompanying drawings. Example configurations are provided so that this disclosure will be thorough, and will fully convey the scope of the disclosure to those of ordinary skill in the art. Specific details are set forth such as examples of specific components, devices, and methods, to provide a thorough understanding of configurations of the present disclosure. It will be apparent to those of ordinary skill in the art that specific details need not be employed, that example configurations may be embodied in many different forms, and that the specific details and the example configurations should not be construed to limit the scope of the disclosure which is limited by the claims.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

When an element or layer is referred to as being "on," "engaged to," "connected to," "attached to," or "coupled to" another element or layer, it may be directly on, engaged, connected, attached, or coupled to the other element or layer, or intervening elements or layers may be present. In contrast, when an element is referred to as being "directly on," "directly engaged to," "directly connected to," "directly attached to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "or" includes any and all combinations of one or more of the associated listed items.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

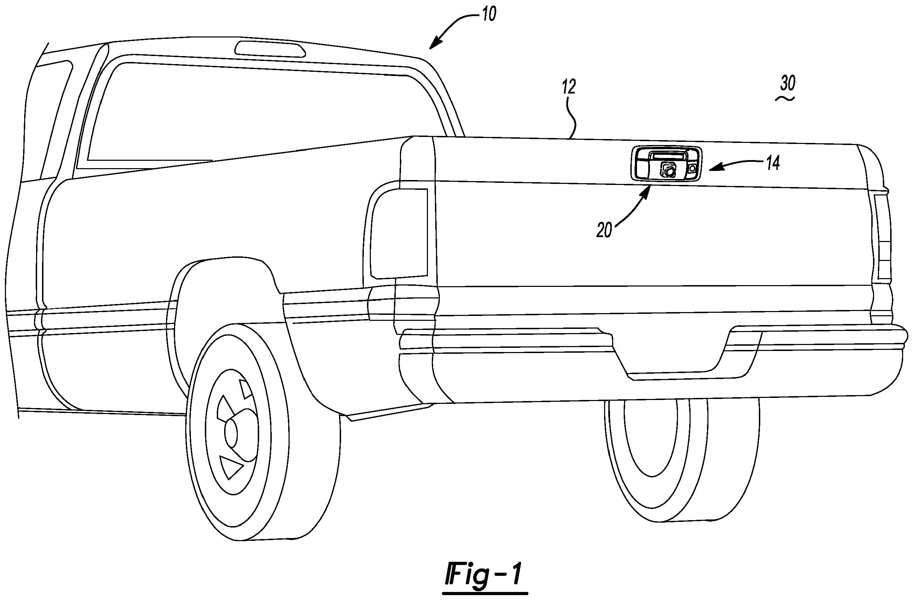

With reference to FIG. 1, a vehicle 10 is provided. The vehicle 10 may be any known variety of vehicle, such as a car, a truck, or a van, for example. The vehicle 10 may include one or more optical devices 20 for monitoring various conditions in an area 30 surrounding and/or external to the vehicle 10. In some implementations, the vehicle 10 includes an optical device 20 disposed on a trunk or a tailgate portion 12 of the vehicle 10. For example, as illustrated in FIG. 1, the optical device 20 may be disposed on, or proximate to, a handle assembly 14 (e.g., a handle area of the tailgate portion 12) of the vehicle 10. It will be appreciated, however, that the vehicle 10 may include various optical devices 20 disposed in other locations on the vehicle 10 within the scope of the present disclosure.

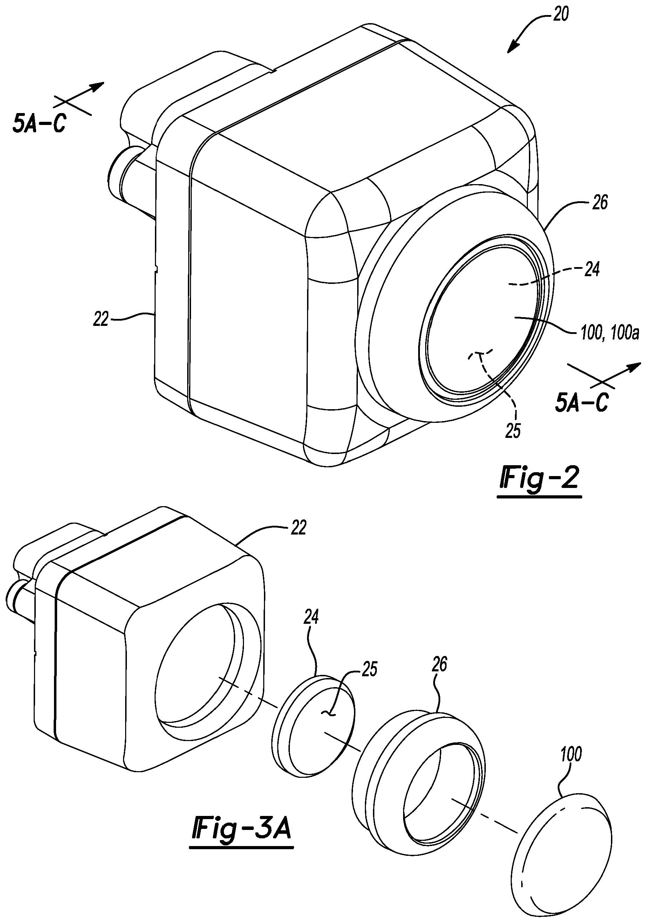

With reference to FIGS. 2 and 3A-C, the optical device 20 may be a camera, a mirror, a sensor such as an optical sensor (i.e., a proximity sensor), or a light source. The optical device 20 can be used to assist a vehicle operator in parking or maneuvering the vehicle 10 during normal operation or to monitor conditions in the areas surrounding the vehicle 10. The optical device 20 may be stationary, deployable to a set location, or controllable by the vehicle user (e.g., similar to a vehicle side-view mirror). Optical devices 20 may be positioned at a variety of locations around the vehicle 10. As examples, optical devices 20 may be positioned on the vehicle 10 as follows: at the front or the rear (e.g., the tailgate portion 12 shown in FIG. 1) of the vehicle 10; the sides (e.g., doors) of the vehicle 10, or within mirrors (e.g., driver side mirror, passenger side mirror, rearview mirror) of the vehicle 10.

Generally, optical devices 20 may include a housing 22, a lens 24, and a lens retainer 26. The housing 22 encloses mechanical structure of the optical device 20 along with any electrical wiring or electrical circuitry for operation of the optical device 20. The lens retainer 26 of the optical device 20 often secures the lens 24 in position relative to the housing 22 of the optical device 20. The lens 24 permits the optical device 20 to sense a field of view relative to the surrounding area 30 of the optical device 20. If the lens 24 becomes exposed to various environmental factors, such as rain, snow, ice, dirt, debris, etc., residue from these environmental factors may collect on an outer surface 25 of the lens 24 and obstruct the field of view of the optical device 20, thereby diminishing the functionality of the optical device 20. In some examples, the outer surface 25 of the lens 24 is convex in shape to converge on an optical focal point. In other examples, the outer surface 25 of the lens 24 is concave in shape to diverge light traveling through the lens 24.

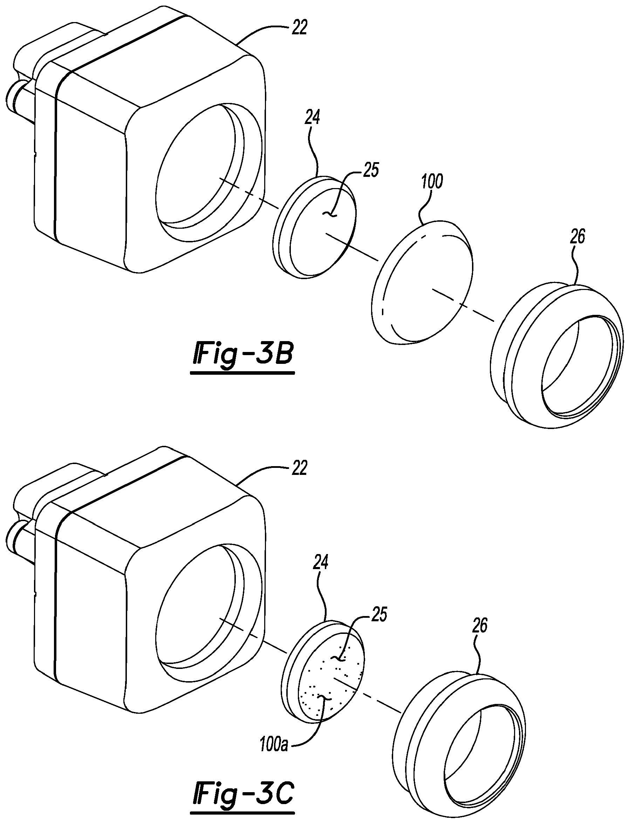

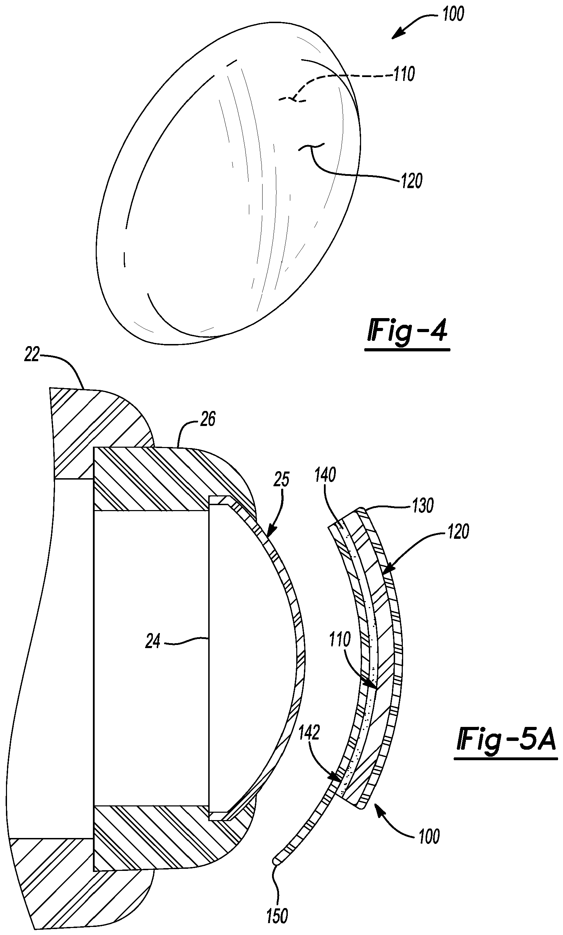

FIG. 2 illustrates an example optical device 20. FIGS. 3A-B illustrate the optical device 20 as including a cover 100 while FIG. 3C illustrates the optical device 20 as including a coating 100a in place of the cover 100. Referring to FIGS. 3A and 5A, the cover 100 is disposed on the outer surface 25 of the lens 24. FIG. 3A illustrates the cover 100 as being directly attached to the lens 24 to allow the cover 100 to serve as the outermost layer of the optical device 20. In so doing, the cover 100 may be applied to an existing lens 24 of an already installed optical device 20. While the cover 100 may be applied to an existing optical device 20, the cover 100 could alternatively be positioned on a lens 24 prior to installation of the optical device 20 (i.e., by a vehicle manufacturer or optical device manufacturer). In some implementations, the cover 100 may be positioned before the lens retainer 26 to allow the lens retainer 26 to further secure the cover 100 to the lens 24 (FIG. 3B). Alternatively, the cover 100 may be replaced by a coating 100a that is applied directly to the outer surface 25 of the lens 24.

FIG. 4 is an example of the cover 100 of FIGS. 3A and 3B for use with the optical device 20. The cover 100 has a concave surface 110 and a convex surface 120. The convex surface 120 is formed on an opposite side of the cover 100 than the concave surface 110. The convex surface 120, which also may be described as a fish-eye for optical devices 20, may permit the optical device 20 to sense the field of view according to a focal length corresponding to a radius of curvature of the convex surface 120. In some implementations, to permit the optical device 20 to sense the field of view through the cover 100, the cover 100 is designed from materials with particular optical properties, such as refractive index and optical transparency.

Generally, a refractive index can be either the ratio of the speed of light in a vacuum to the speed of light through a given material or a ratio that measures the angle light bends as the light passes through a material. Similarly, some industries measure the transparency (also sometimes referred to as the optical clarity) of polymers according to standard test methods. As an example, one such testing method set forth by the American Standard for Testing and Materials is ASTM D-1003 that determines the light transmission for a specimen of defined parameters (e.g., thickness, volume, etc.). According to the ASTM D-1003 standard, a material that typically has a light transmission percentage greater than 85% is considered optically transparent. Some manufacturing of optical materials may also take into account a material's birefringence. Birefringence may identify operative directions of light for a given material or inherent mechanical stresses of a plastic material. The birefringence may indicate how manufacturing processes, such as thermoforming or embossing, impact the optical properties of a plastic.

To maintain a level of optical clarity similar to the optical device 20, the cover 100 is formed from materials with a refractive index greater than 1.4. The cover 100 may be formed from either a hard material or a soft, flexible material. In some implementations, the cover 100 may be formed from materials such as acrylic, styrene, polycarbonate, cyclic-olefin polymers, cyclic-olefin copolymers, or glass. Additionally or alternatively, the cover 100 may be formed from high refractive index polymers like nanocomposites (e.g., organic-inorganic hybrid materials).

Referring to FIGS. 5A-B, the cover 100 may include a hydrophobic coating 130 formed on the convex surface 120 and an adhesive 140 disposed on the concave surface 110. The adhesive 140 may be used to attach the cover 100 to the optical device 20. In some implementations, the cover 100 includes a release film 150 removably attached to the adhesive 140 on a surface 142 opposite the concave surface 110. In some examples, the concave surface 110 of the cover 100 matingly receives a convex outer surface 25 of the optical device 20.

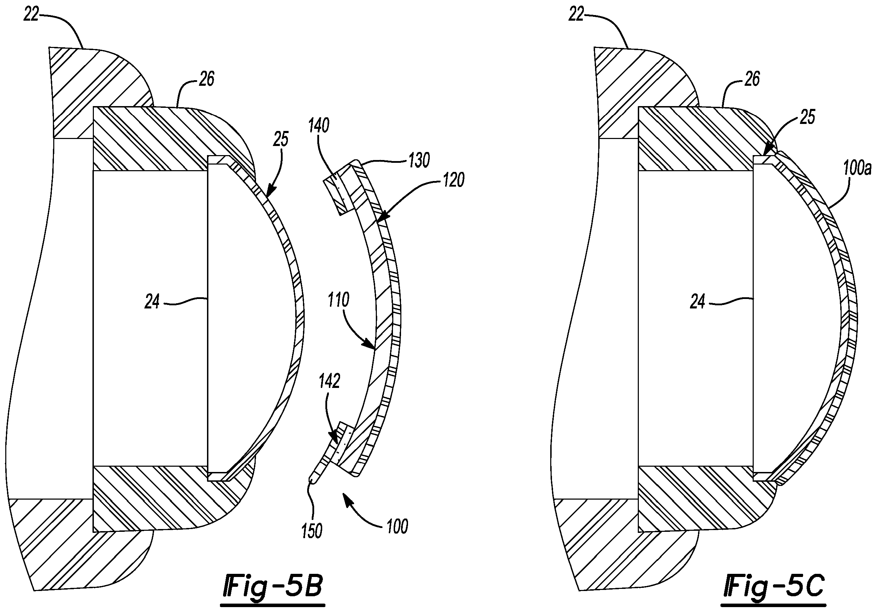

FIGS. 5A-B are examples where the cover 100 matingly receives the convex outer surface 25 of the lens 24. In some examples, such as FIG. 5A, the adhesive 140 covers most if not all of the concave surface 110 of the cover 100. In the configuration shown in FIG. 5A, the adhesive 140 may have a light transmission percentage greater than 85% such that the field of view of the optical device 20 is not impaired by the adhesive 140. For example, the adhesive 140 may be an acrylic based, pressure-sensitive adhesive or a silicone transfer adhesive. In other examples, such as FIG. 5B, the adhesive 140 is only located proximate to an outer perimeter of the cover 100 such that a majority of the field of view of the optical device 20 is not impaired by the adhesive 140. In this configuration, the adhesive 140 encircles the cover 100 proximate to the outer perimeter of the cover 100.

In operation, removal of the release film 150 allows the cover 100 to be attached to the lens 24 of the optical device 20 via the adhesive 140. In some examples, the lens 24 of the optical device 20 may include an anti-reflective or anti-glare coating. The adhesive 140, in these examples, may include bonding characteristics that allow the adhesive 140 to adhere to the anti-reflective or anti-glare coating of the lens 24.

Referring further to FIGS. 5A-B, the hydrophobic coating 130 repels water droplets that may contact the convex surface 120 due to precipitation (i.e., rain, snow, etc.). When a water droplet lands on the convex surface 120 of the cover 100 with the hydrophobic coating 130, the hydrophobic coating 130 causes the water droplet to be repelled from the convex surface 120. Such repulsion is defined as a repulsion contact angle between the convex surface 120 and the water droplet. In some implementations, the performance of the hydrophobic coating 130 of the cover 100 is defined by a repulsion contact angle ranging from about 90 degrees (90°) to about 180 degrees (180°).

In some implementations, the hydrophobic coating 130 may be a coating disposed on a substrate that is disposed on the convex surface 120 of the cover 100. For example, the hydrophobic coating 130 may be applied to a surface of an optically clear substrate (not shown) while a surface of the optically clear substrate opposite the surface with the hydrophobic coating 130 attaches to the convex surface 120 of the cover 100.

FIG. 5C illustrates the coating 100a covering and being directly applied to the lens 24. The coating 100a may be identical to the hydrophobic coating 130. Accordingly, the configuration shown in FIG. 5C is similar to those shown in FIGS. 5A and 5B with the exception that the coating 130 is directly applied to the lens 24 rather than being supported relative to the lens 24 by the cover 100.

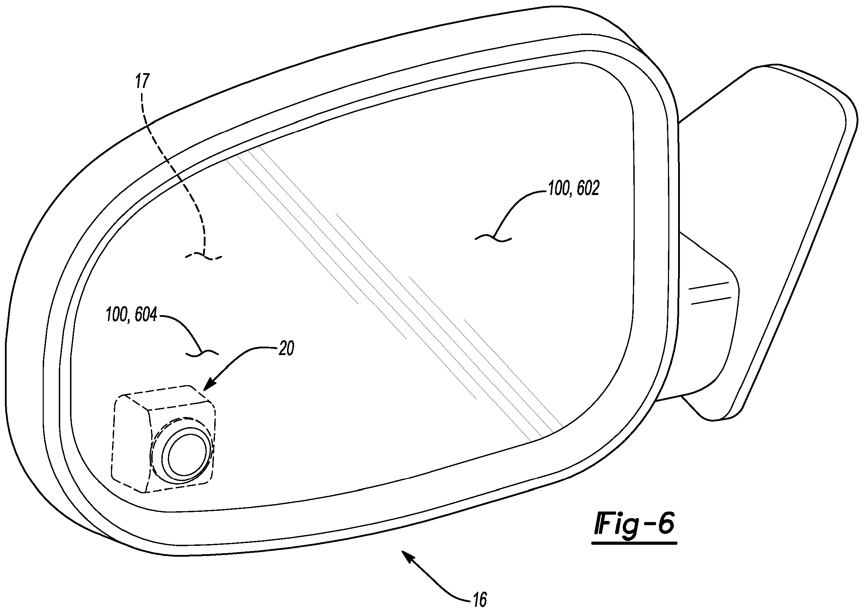

In another arrangement described herein shown in FIG. 6, the optical device 20 incorporates a cover 100. Namely, FIG. 6 illustrates a side-view mirror 16 including a cover 100 disposed on a mirrored surface 17 and enclosing the optical device 20 associated therewith. In this arrangement, the cover 100 may include a substantially flat portion 100, 602 disposed substantially parallel to the mirrored surface 17 and an embossed portion 100, 604 that covers the lens 24 of the optical device 20 in a similar fashion as described above with respect to FIGS. 5A and 5B. The embossed portion 100, 604 includes the convex surface 120 and the concave surface 110 of the cover 100. During manufacture of the cover 100, the cover 100 may be selectively embossed in the embossed portion 100, 604 to accommodate for a size and a shape of the optical device 20 of the side-view mirror 16. Additionally or alternatively, the cover 100 may be a coating such as the hydrophobic coating 130 that is applied directly to the mirrored surface 17 and/or to the optical device 20 in a similar fashion as described above with respect to FIG. 5C. For example, the coating 130 may be applied to the substantially flat portion 100, 602 and/or to the embossed portion 100, 604. Although the side-view mirror 16 is shown as an example of this arrangement, the cover 100 may be disposed on any optical device 20 embedded in a surface that may be obstructed or obscured by water droplets from precipitation. Further, the coating 130 could be directly applied to an optical sensor (i.e., a proximity sensor) located at or within a front or rear bumper (neither shown) to maintain a working surface (i.e., a sensing surface) of the optical sensor clean and dry.

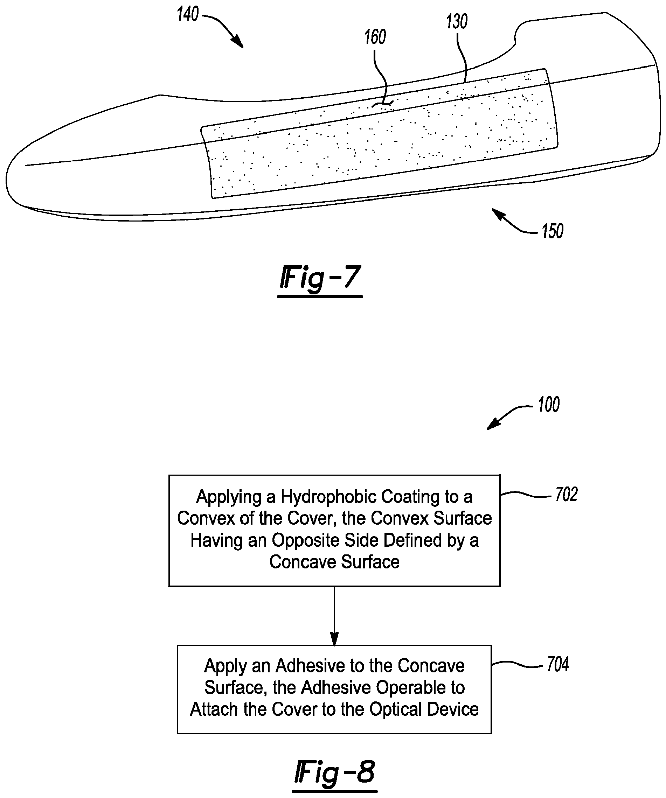

In another arrangement described herein shown in FIG. 7, the hydrophobic coating 130 may be applied to a light source such as a light guide 140 associated with a door handle 150 of a vehicle. Namely, the coating 130 may be applied to a surface 160 of a light guide 140 having similar optical characteristics as the lens 24 of the optical device 20 to prevent debris from collecting on the light guide 140 and restricting light from passing through the light guide 140. In operation, the coating 130 restricts debris from collecting on the surface 160 of the light guide 140 in a similar fashion as the coating 130 associated with the optical device 20 (FIGS. 5A-C). In so doing, the coating 130 permits the light guide 140 to allow light emitted from a light-emitting element (not shown) disposed within the door handle 150 and behind the light guide 140 to shine through the light guide 140 without being obstructed by debris. While the coating 130 is described and shown as being directly applied to the surface 160 of the light guide 140, the coating 130 could alternatively be supported relative to the surface 160 by a cover in a similar fashion as shown and described above with respect to FIGS. 5A and 5B. In such a configuration, the cover would include a shape that mimics the shape of the surface 160 to allow the surface 160 to matingly receive the cover in a similar fashion as the lens 24 matingly receives the shape of the cover 100 of FIGS. 5A and 5B.

FIG. 8 illustrates a method 700 for making a cover 100 for an optical device 20. The method 700 includes, at block 702, applying a hydrophobic coating 130 to a convex surface 120 of the cover 100, or to the mirrored surface 17 or to the surface 160, and, at block 704, applying an adhesive 140 to the concave surface 110. For example, at block 702, the method 700 may include applying the hydrophobic coating 130 to the convex surface 120 of the cover 100, or directly to the mirrored surface 17 or directly to the surface 160, by dip coating or by vacuum depositing the coating 130 onto the convex surface 120 of the cover 100 or onto the mirrored surface 17 or the surface 160. The convex surface 120 may have an opposite side defined by the concave surface 110. The adhesive 140 may be used to attach the cover 100 to the optical device 20.

The foregoing description has been provided for purposes of illustration and description. It is not intended to be exhaustive or to limit the disclosure which is limited by the claims.

## Claims

1. A cover (100) for an optical device (24), the cover comprising:
a concave surface (110);
a convex surface (120) formed on an opposite side of the cover than the concave surface;
a hydrophobic coating (130) formed on the convex surface; and
an adhesive (140) disposed on the concave surface proximate an outer perimeter of the cover and operable to attach the cover to the optical device such that a majority of a field of view of the optical device is not covered by the adhesive.

2. The cover of Claim 1, further comprising a release film (150) removably attached to the adhesive.

3. The cover of Claim 1, wherein the cover is formed from a material with a refractive index greater than 1.4.

4. The cover of Claim 1, wherein the cover is formed from a flexible material.

5. The cover of Claim 1, wherein the concave surface matingly receives a convex surface of the optical device.

6. The cover of Claim 1, wherein the optical device is one of a camera, a mirror, a sensor, and a light source.

7. The cover of Claim 1, wherein the adhesive has a light transmission percentage greater than 85%.

8. The cover of Claim 1, wherein the hydrophobic coating forms a repulsion contact angle with a water droplet.

9. A method for making a cover (100) for an optical device (24), the method comprising:
applying a hydrophobic coating (130) to a convex surface (120) of the cover, the convex surface having an opposite side defined by a concave surface (110); and
applying an adhesive (140) to the concave surface proximate an outer perimeter of the cover, the adhesive operable to attach the cover to the optical device such that a majority of a field of view of the optical device is not covered by the adhesive.

10. The method of Claim 9, further comprising attaching a release film to the adhesive opposite the concave surface.

11. The method of Claim 9, wherein applying the hydrophobic coating includes applying the hydrophobic coating to the convex surface of the cover, the cover formed from a material with a refractive index greater than 1.4.

12. The method of Claim 9, wherein applying the hydrophobic coating includes applying the hydrophobic coating to the convex surface of a flexible material.

13. The method of Claim 9, wherein applying the adhesive to the concave surface includes applying the adhesive to the concave surface operable to matingly receive a convex surface of the optical device.

14. The method of Claim 9, wherein applying the adhesive to the concave surface includes applying adhesive with a light transmission percentage greater than 85%.

15. The method of Claim 9, wherein applying the hydrophobic coating includes applying the hydrophobic coating to form a repulsion contact angle with a water droplet.

## Patentansprüche

1. Abdeckung (100) für ein optisches Gerät (14), wobei die Abdeckung umfasst:
eine konkave Fläche (110);
eine konvexe Fläche (120), die auf einer der konkaven Fläche (110) gegenüberliegenden Seite der Abdeckung gebildet ist;
eine hydrophobe Beschichtung (130), die auf der konvexen Fläche gebildet ist;
und einen Klebestoff (140), der in der Nähe eines Außenumfangs der Abdeckung angeordnet ist und wirksam ist zum Befestigen der Abdeckung an dem optischen Gerät auf solche Weise, dass ein Großteil eines Sichtfelds des optischen Geräts nicht mit Klebstoff bedeckt ist.

2. Abdeckung nach Anspruch 1, ferner umfassend eine Trennfolie (150), die an dem Klebstoff lösbar befestigt ist.

3. Abdeckung nach Anspruch 1, wobei die Abdeckung aus einem Material mit einem Brechungsindex von mehr als 1,4 gebildet ist.

4. Abdeckung nach Anspruch 1, wobei die Abdeckung aus einem flexiblen Material gebildet ist.

5. Abdeckung nach Anspruch 1, wobei die konkave Fläche eine konvexe Fläche des optischen Geräts zusammenpassend aufnimmt.

6. Abdeckung nach Anspruch 1, wobei das optische Gerät eine Kamera, ein Spiegel, ein Sensor oder eine Lichtquelle ist.

7. Abdeckung nach Anspruch 1, wobei der Klebstoff einen Lichtdurchlässigkeits-Prozentwert von mehr als 85% aufweist.

8. Abdeckung nach Anspruch 1, wobei die hydrophobe Beschichtung einen Repulsionskontaktwinkel mit einem Wassertropfen bildet.

9. Verfahren zur Herstellung einer Abdeckung (100) für ein optisches Gerät (24), wobei das Verfahren umfasst:
das Aufbringen einer hydrophoben Beschichtung (130) auf einer konvexen Fläche (120) der Abdeckung, wobei die konvexe Fläche eine durch eine konkave Fläche (110) definierte gegenüberliegende Seite hat; und
das Auftragen eines Klebstoffs (140) auf die konkave Fläche in der Nähe eines Außenumfangs der Abdeckung, wobei der Klebstoff wirksam ist zum Befestigen der Abdeckung an dem optischen Gerät auf solche Weise, dass ein Großteil eines Sichtfelds des optischen Geräts nicht mit Klebstoff bedeckt ist.

10. Verfahren nach Anspruch 9, ferner umfassend das Anbringen einer Trennfolie an dem Klebstoff gegenüber der konkaven Fläche.

11. Verfahren nach Anspruch 9, wobei das Aufbringen der hydrophoben Beschichtung das Aufbringen der hydrophoben Beschichtung auf der konvexen Fläche der Abdeckung umfasst, wobei die Abdeckung aus einem Material mit einem Brechungsindex von mehr als 1,4 gebildet ist.

12. Verfahren nach Anspruch 9, wobei das Aufbringen der hydrophoben Beschichtung das Aufbringen der hydrophoben Beschichtung auf der konvexen Fläche eines flexiblen Materials umfasst.

13. Verfahren nach Anspruch 9, wobei das Auftragen des Klebstoffs auf der konkaven Fläche das Auftragen des Klebstoffs auf der konkaven Fläche umfasst, die wirksam ist für eine zusammenpassende Aufnahme einer konvexen Fläche des optischen Geräts.

14. Verfahren nach Anspruch 9, wobei das Auftragen des Klebstoffs auf der konkaven Fläche das Auftragen eines Klebstoffs mit einem Lichtdurchlässigkeits-Prozentwert von mehr als 85% umfasst.

15. Verfahren nach Anspruch 9, wobei das Auftragen der hydrophoben Beschichtung das Auftragen der hydrophoben Beschichtung zum Bilden eines Repulsionskontaktwinkels mit einem Wassertropfen umfasst.

## Revendications

1. Capot (100) pour un dispositif optique (24) comprenant :
- une surface concave (110),
- une surface convexe (120) sur la face opposée à la surface concave du capot,
- un revêtement hydrophobe (130) sur la surface convexe et un adhésif (140) sur la surface concave au voisinage de la périphérie extérieure du capot et permettant de fixer le capot au dispositif optique pour que la plus grande partie du champ de vision du dispositif optique ne soit pas couverte par l'adhésif.

2. Capot selon la revendication 1,
comprenant en outre un film amovible (150) fixé de manière amovible à l'adhésif.

3. Capot selon la revendication 1,
formé d'une matière ayant un indice de réfraction supérieur à 1,4.

4. Capot selon la revendication 1,
réalisé dans une matière flexible.

5. Capot selon la revendication 1,
dans lequel la surface concave reçoit de façon adaptée la surface convexe du dispositif optique.

6. Capot selon la revendication 1,
dans lequel le dispositif optique est une caméra, un miroir, un capteur ou une source lumineuse.

7. Capot selon la revendication 1,
dans lequel l'adhésif a un pourcentage de transmission lumineuse supérieure à 85%.

8. Capot selon la revendication 1,
dans lequel le revêtement hydrophobe forme avec une gouttelette d'eau un angle de contact de répulsion.

9. Procédé de réalisation d'un capot (100) pour un dispositif optique (24), procédé consistant à :
- appliquer un revêtement hydrophobe (130) sur une surface convexe (120) du capot, cette surface convexe ayant une face opposée formant une surface concave (110), et
- appliquer de l'adhésif (140) sur la surface concave à proximité de la périphérie extérieure du capot, l'adhésif étant destiné à fixer le capot sur le dispositif optique pour que la plus grande partie du champ de vision du dispositif optique ne soit pas couverte par l'adhésif.

10. Procédé selon la revendication 9,
consistant en outre à fixer un film amovible sur l'adhésif à l'opposé de la surface concave.

11. Procédé selon la revendication 9,
selon lequel
appliquer le revêtement hydrophobe consiste à appliquer ce revêtement hydrophobe sur la surface convexe du capot, le capot étant réalisé en une matière ayant un indice de réfraction supérieur à 1,4.

12. Procédé selon la revendication 9,
selon lequel appliquer le revêtement hydrophobe consiste à appliquer ce revêtement hydrophobe sur la surface convexe d'une matière flexible.

13. Procédé selon la revendication 9,
selon lequel
appliquer l'adhésif sur la surface concave consiste à appliquer l'adhésif sur la surface concave pour qu'elle permette de recevoir étroitement la surface convexe du dispositif optique.

14. Procédé selon la revendication 9,
selon lequel
appliquer l'adhésif sur la surface concave consiste à appliquer l'adhésif avec un pourcentage de transmission de lumière supérieur à 85%.

15. Procédé selon la revendication 9,
selon lequel
appliquer le revêtement hydrophobe consiste à appliquer le revêtement hydrophobe pour former avec une gouttelette d'eau, un angle de contact de répulsion.
